# FASCICULE DE BREVET EUROPEEN

(11) **EP 0 919 742 B1**
(45) Date de publication et mention de la délivrance du brevet: **07.05.2003**
(21) Numéro de dépôt: 98122185.6
(22) Date de dépôt: 26.11.1998
(51) Int. Cl.: F16F 15/139

(54) **Dispositif amortisseur de torsion et ensemble unitaire de frottement pour un tel dispositif**
Drehschwingungsdämpfer und Reibungseinheit für diesen Dämpfer
Torsional damper and friction unit for such a damper.

(30) Priorité: 28.11.1997 FR 9715021
(43) Date de publication de la demande: 02.06.1999
(73) Titulaire: VALEO EMBRAYAGES, 80009 Amiens Cedex 1 (FR)
(72) Inventeur: Grieco, Giovanni, 92700 Colombes (FR)
(74) Mandataire: Gamonal, Didier

(56) Documents cités:
- WO-A-96/29525
- FR-A- 2 725 003
- FR-A- 2 730 292
- US-A- 5 496 216

## Description

La présente invention concerne d'une manière générale les dispositifs amortisseurs de torsion, notamment pour véhicules automobiles, du genre comportant deux parties coaxiales montées rotatives l'une par rapport à l'autre, à l'encontre de moyens élastiques à action circonférentielle, et d'un dispositif de frottement.

D'une manière générale, l'une des parties consiste en une première masse comprenant un moyeu dit premier moyeu, tandis que l'autre desdites parties consiste en une seconde masse comportant un plateau portant à sa périphérie interne un moyeu dit second moyeu entourant au moins partiellement ledit premier moyeu. Un amortisseur de torsion à action circonférentielle accouple la première masse au plateau de la seconde masse, tandis que des moyens de paliers anti-friction sont interposés radialement entre les premier et second moyeux.

Un dispositif de ce type est par exemple décrit dans le document FR-A-2 730 292.

Selon ce document, le dispositif de frottement agit axialement entre la première et la seconde masse et comprend une rondelle de frottement entraînée par la seconde masse par des pions ou des rainures et en contact de frottement avec une portée transversale de frottement du premier moyeux de la première masse.

Ce dispositif comporte également une rondelle élastique à action axiale, une rondelle d'application entraînée en rotation par des rainures ou autres ménagées dans le premier moyeu, et un anneau de calage pour le calage axial de la rondelle élastique.

Il en résulte que ce dispositif de frottement comporte un grand nombre de pièces séparées, ce qui complique le montage. Par ailleurs, les moyens de paliers anti-friction sont soumis à des efforts axiaux exercés par le dispositif de frottement.

De plus, ce dispositif est encombrant radialement.

Pour éviter ces inconvénients, on a déjà proposé de constituer le dispositif de frottement sous forme d'un ensemble unitaire comportant au moins un élément en matière de frottement en forme d'anneau de frottement pour contact de frottement avec une portée de frottement, globalement d'orientation axiale, solidaire de l'une desdites première et seconde masses ; un dispositif de frottement de ce genre est par exemple décrit dans le document FR-2 688 564 ; malheureusement, ce dispositif tel que décrit ne permet pas d'obtenir un frottement constant lors du débattement angulaire d'une masse par rapport à l'autre.

La présente invention a pour but de pallier cet inconvénient et pour objet un dispositif de frottement du genre ci-dessus assurant un frottement constant.

Ainsi, selon l'invention, un dispositif amortisseur de torsion, notamment pour véhicules automobiles, du genre comportant deux parties coaxiales montées rotatives l'une par rapport à l'autre, à l'encontre de moyens élastiques à action circonférentielle et d'un dispositif de frottement agissant entre lesdites parties, dans lequel l'une desdites parties consiste en une première masse portant un moyeu dit premier moyeu, tandis que l'autre desdites parties consiste en une seconde masse comportant un plateau portant à sa périphérie interne un moyeu dit second moyeu entourant au moins partiellement ledit premier moyeu, avec interposition de moyens de palier anti-friction disposés radialement entre le premier moyeu et le second moyeu, ledit dispositif de frottement entourant ledit premier moyeu, le dispositif de frottement formant un ensemble unitaire de frottement comportant au moins un élément en matière de frottement en forme d'anneau de frottement pour contact de frottement avec une portée de frottement, globalement d'orientation axiale, solidaire de l'une desdites première et seconde masses, est caractérisé par le fait que ledit ensemble unitaire comprend une rondelle dite de serrage munie de moyens de serrage, de maintien et de solidarisation en rotation de l'anneau de frottement à l'autre desdites seconde et première masses.

Avantageusement, la rondelle de serrage comporte des moyens d'assemblage pour rendre solidaires l'ensemble unitaire de frottement et l'autre desdites seconde et première masses ; les moyens d'assemblage consistent en des griffes globalement radiales réparties à la périphérie externe de la rondelle de serrage, lesdites griffes étant adaptées à coopérer avec la paroi cylindrique axiale interne d'un lamage ménagé en bout du moyeu de l'autre desdites seconde et première masses.

De préférence, les moyens de solidarisation en rotation de l'anneau de frottement comprennent au moins une patte dite de calage en rotation s'étendant radialement à la périphérie interne de la rondelle de serrage et adaptée à coopérer avec une encoche radiale ménagée dans l'anneau de frottement ; la patte de calage en rotation est placée au droit d'une griffe d'assemblage ; l'encoche radiale débouche dans une face transversale d'extrémité de l'anneau de frottement.

Avantageusement, les moyens de serrage sont constitués par des pattes élastiques dites de serrage radial portées par la rondelle de serrage, s'étendant axialement et appliquant l'anneau de frottement contre la portée de frottement, ledit anneau de frottement étant déformable radialement ; les pattes de serrage radial s'étendent axialement depuis la périphérie interne de la rondelle de serrage.

De préférence, l'anneau de frottement est un anneau fendu, le diamètre de sa face cylindrique de frottement étant au repos supérieur au diamètre de la portée de frottement.

Avantageusement, les moyens de maintien de l'anneau de frottement comprennent deux séries de pattes dites de calage axial, s'étendant transversalement, chacune des séries étant axialement à une distance de l'autre correspondant globalement à la longueur axiale de l'anneau de frottement ; l'une des séries de pattes de calage axial est ménagée à la périphérie interne de la rondelle de serrage dans le plan transversal où s'étendent les griffes d'assemblage ; l'autre série de pattes de calage radial est constituée par des rebords radiaux ménagés à l'extrémité des pattes de serrage radial.

De préférence, les pattes de calage axial, les pattes de serrage radial et les griffes sont alternées circonférentiellement.

Avantageusement, l'ensemble unitaire de frottement est disposé du côté intérieur du dispositif par rapport aux moyens de palier anti-friction ; en variante, l'ensemble unitaire de frottement est disposé du côté extérieur du dispositif par rapport aux moyens de palier anti-friction.

De préférence, les moyens de palier anti-friction sont constitués par un roulement à billes.

Selon une forme de réalisation préférée, la portée de frottement est solidaire de la première masse.

La présente invention a également pour objet un ensemble unitaire de frottement pour dispositif amortisseur de torsion, lequel a les caractéristiques de l'ensemble unitaire de frottement du dispositif amortisseur de torsion ci-dessus.

Pour mieux faire comprendre l'objet de l'invention, on va en décrire maintenant, à titre d'exemple, purement illustratif et non limitatif, un mode de réalisation représenté sur les dessins annexés.

Sur ces dessins :
la figure 1 est une vue partielle en coupe axiale d'un dispositif amortisseur de torsion selon l'invention ;
la figure 2 est une vue en coupe selon II-II de la figure 1 ;
la figure 3 est une vue éclatée en perspective de l'ensemble unitaire de frottement des figures 1 et 2, à plus grande échelle ;
la figure 4 est une vue analogue à la figure 1 et correspond à une variante ;
la figure 5 est une vue latérale selon la flèche V de la figure 4.

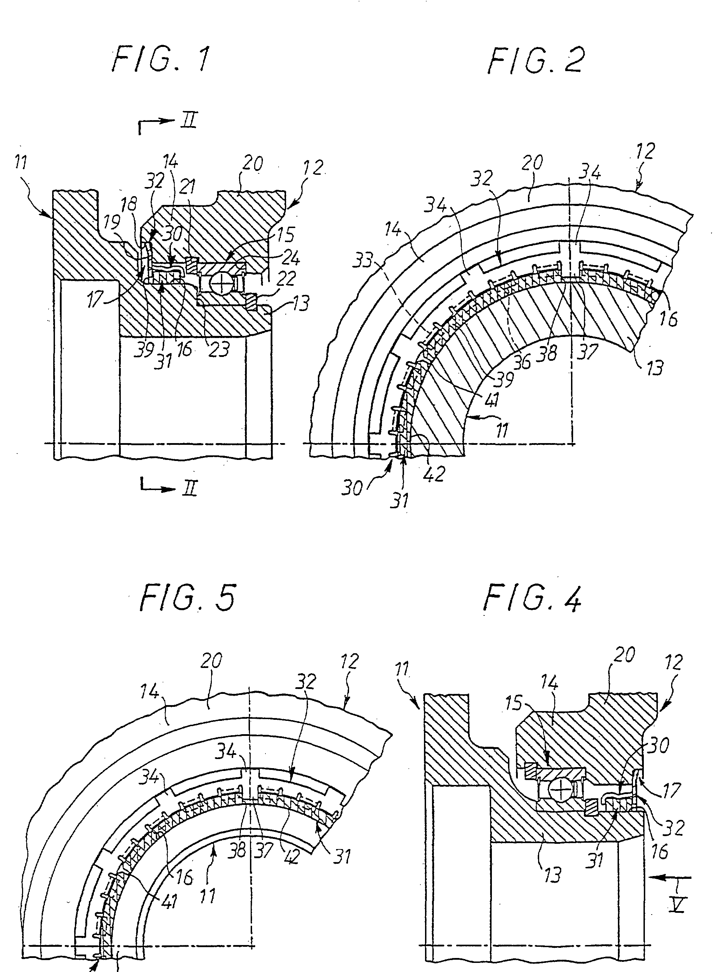

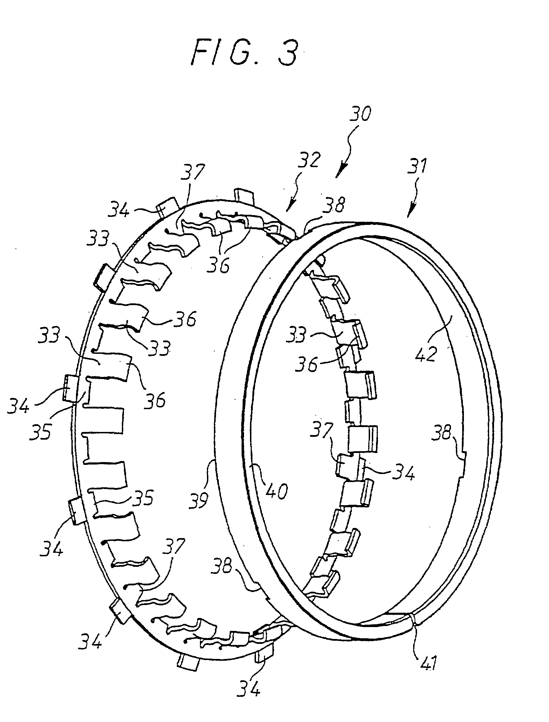

Le dispositif amortisseur de torsion, illustré dans les figures 1 à 3, est un double volant amortisseur destiné à équiper un véhicule automobile. Ce double volant comporte une première masse 11 comprenant un moyeu 13 dit premier moyeu, une seconde masse 12 comprenant un plateau 20 portant intérieurement un moyeu 14 dit second moyeu entourant ici ledit premier moyeu 13, un amortisseur de torsion à action circonférentielle accouplant la première masse 11 au plateau 20 de la seconde masse 12, par exemple du type décrit dans le document FR-A-2 688 564 auquel il conviendra de se reporter pour plus de détails, et comportant un dispositif de frottement 30 agissant selon l'invention radialement entre la première masse 11 et la seconde masse 12.

La première masse 11 forme la partie d'entrée de l'amortisseur de torsion, tandis que la seconde masse 12 forme la partie de sortie dudit amortisseur.

La seconde masse 12 est montée rotative sur la première masse 11 grâce à des moyens de palier anti-friction 15 interposés radialement entre les moyeux 13 et 14.

La première masse 11 est calée en rotation sur le moteur à combustion interne du véhicule automobile en étant fixée sur le vilebrequin dudit moteur et la seconde masse 12 est calée en rotation sur l'arbre d'entrée de la boîte de vitesses par l'intermédiaire de l'embrayage du véhicule automobile.

Le dispositif de frottement 30 entoure le premier moyeu 13 sur lequel sont montés les moyens de palier anti-friction 15, ici un roulement à billes à une rangée de billes. En variante, les moyens de palier 15 peuvent consister en un roulement à deux rangées de billes ou en un palier en matériau anti-friction.

Le roulement 15 est interposé radialement entre le premier moyeu 13 et le second moyeu 14. Ce second moyeu 14, qui s'étend à la périphérie interne du plateau 20, a un alésage interne épaulé pour appui de la bague externe du roulement 15 engagé dans ledit alésage ; le roulement 15 est calé axialement sur ledit second moyeu 14 par ledit épaulement 24 et par un jonc 21.

Le roulement 15 est calé axialement sur le premier moyeu 13, d'une part, par l'intermédiaire d'un jonc 22 et, d'autre part, par l'intermédiaire d'un épaulement 23 formé à la faveur d'un changement de diamètre du premier moyeu 13.

La seconde masse 12 est ainsi calée axialement sur la première masse 11 en étant montée rotative par rapport à celle-ci grâce aux moyens de palier anti-friction 15.

Le dispositif de frottement 30 forme un ensemble unitaire de frottement comportant au moins un élément 31 en matière de frottement en forme d'anneau de frottement pour contact de frottement avec une portée de frottement 16, globalement d'orientation axiale, solidaire de l'une desdites première 11 et seconde 12 masses ; ledit ensemble unitaire 30 est interposé radialement entre ladite portée de frottement 16 et l'autre desdites seconde 12 et première 11 masses.

Ici, la portée de frottement 16 est continue et appartient au premier moyeu 13. Plus précisément, cette portée est d'orientation axiale et est de forme annulaire cylindrique. Elle s'étend radialement en vis-à-vis du second moyeu 14.

L'ensemble unitaire 30 comprend une rondelle de serrage 32 présentant un certain nombre de moyens lui permettant d'assurer plusieurs fonctions.

A la périphérie externe de la rondelle de serrage 32, sont ménagées des griffes 34 globalement radiales constituant des moyens d'assemblage pour assembler la rondelle de serrage 32 et le second moyeu 14 ; pour ce faire, le second moyeu 14 présente en bout un lamage 17 avec la paroi cylindrique axiale interne 18 duquel les griffes 34 sont adaptées à coopérer.

Pour solidarisation en rotation de l'anneau de frottement 31 avec la rondelle de serrage 32, donc avec la seconde masse 12 par l'intermédiaire du second moyeu 14, la rondelle de serrage 32 présente à sa périphérie interne au moins une patte 37 dite de calage en rotation qui s'étend radialement et qui est adaptée coopérer avec une encoche radiale 38 de l'anneau de frottement 31 ; ici, sont prévues trois pattes de calage en rotation 37, également réparties circonférentiellement, et donc trois encoches radiales 38 ; comme on peut le voir sur les dessins, les trois pattes de calage en rotation 37 sont placées au droit de certaines griffes d'assemblage 34.

Les encoches radiales 38 de l'anneau de frottement 31 débouchent dans l'une des faces transversales d'extrémité 39, 40 de celui-ci, ici la face 39.

La rondelle de serrage 32 porte également, comme son nom l'indique, les moyens de serrage de l'anneau de frottement 31 ; ceux-ci sont constitués par des pattes 33 élastiques de serrage radial s'étendant axialement et appliquant l'anneau de frottement 31 contre la portée de frottement 16 du premier moyeu 13, l'anneau de frottement 31 étant déformable radialement ; ici, l'anneau de frottement 31 est un anneau fendu ; sa fente 41 est visible sur les figures 2 et 3 ; le diamètre de sa face cylindrique de frottement 42, ici sa face interne, est au repos supérieur à celui de la portée de frottement 16 avec laquelle elle coopère.

Comme cela est visible sur les figures, les pattes de serrage radial 33 s'étendent axialement depuis globalement la périphérie interne de la rondelle de serrage 32.

C'est également la rondelle de serrage 32 qui assure le maintien ou calage axial de l'anneau de frottement 31.

Pour ce faire, la rondelle de serrage 32 présente deux séries de pattes 35 et 36, de calage axial, s'étendant transversalement et distantes axialement globalement de la longueur axiale de l'anneau de frottement 31.

Une série de pattes 35 de calage axial est ménagée à la périphérie interne de la rondelle de serrage 32 dans le plan transversal où s'étendent les griffes d'assemblage 34.

L'autre série de pattes 36 est ici constituée par des rebords radiaux dirigés vers l'axe et ménagés à l'extrémité des pattes de serrage radial 33 : lesdites pattes de serrage radial 33 étant élastiques, la mise en place de l'anneau de frottement 31 est facilitée.

Ici, les pattes de calage axial 35, les pattes de serrage radial 33 et les griffes 34 sont alternées circonférentiellement ; plus précisément, intérieurement les pattes de calage axial 35 et les pattes de serrage radial 33 se succèdent alternativement, sachant que trois des pattes de calage axial 35 sont absentes et remplacées par trois pattes 37 de calage en rotation ; extérieurement, une griffe 34 est prévue toutes les deux pattes de calage axial 35 au droit desquelles elles s'étendent.

Comme on le voit, l'ensemble constitué par la rondelle de serrage 32 et l'anneau de frottement 31 qu'elle porte constitue un ensemble unitaire de frottement 30.

Ici, l'ensemble unitaire de frottement 30 est disposé du côté intérieur par rapport au roulement à billes 15 ; il peut bien entendu être disposé du côté extérieur, comme le montre la variante des figures 4 et 5.

Le fonctionnement du dispositif découle de la description ci-dessus.

Lors du déplacement angulaire relatif des première 11 et seconde 12 masses, l'anneau de frottement 31 entraîné par le second moyeu 14 de la seconde masse 12 frotte sur la portée de frottement 16 ménagée à la périphérie externe du premier moyeu 13 de la première masse 11, et ce en permanence.

On appréciera que, lorsque le véhicule roule, le serrage radial diminue, l'anneau de frottement 31 s'ouvrant sous l'effet de la force centrifuge ; ceci est favorable car, comme on le sait, c'est surtout à l'arrêt et au démarrage du véhicule qu'un amortissement important est recherché.

Dans le document FR-A-2 688 564 précité, la seconde masse porte un voile avec des bras radiaux pour action sur des ressorts de forme courbe s'appuyant sur des blocs portés par la première masse.

Le document FR-98 12567 déposé le 07/10/1998 montre également de tels ressorts à action radiale disposés dans des cassettes articulées pour agir en compression. A la lumière de ce document, on voit que le plateau de réaction et le second moyeu peuvent être distincts l'un de l'autre pour appartenir à un limiteur de couple intervenant au sein de la seconde masse.

Grâce à l'invention, on obtient une solution simple car la rondelle de serrage permet, d'une part, de supprimer la bague de répartition et la goupille de liaison en rotation décrites dans le document FR-A-2 698 938 (US-A-5 496 216) et, d'autre part, de créer un ensemble unitaire.

En effet, les pattes 33 sont en contact avec la rondelle 31, en sorte que la rondelle de serrage fait office de rondelle de répartition des efforts.

Les griffes d'assemblage 34 permettent de supprimer la goupille de l'art antérieur ne permettant pas la formation d'un ensemble de frottement unitaire.

A la lumière de ce document FR-A-2 698 938 on voit que l'anneau de frottement 31 peut engrener un jeu circonférentiel avec la rondelle de serrage 32, un jeu circonférentiel pouvant exister entre la patte de calage 37 et l'encoche 38.

## Revendications

1. Dispositif amortisseur de torsion, notamment pour véhicules automobiles, du genre comportant deux parties coaxiales (11, 12) montées rotatives l'une par rapport à l'autre, à l'encontre de moyens élastiques à action circonférentielle et d'un dispositif de frottement (30) agissant entre lesdites parties, dans lequel l'une desdites parties consiste en une première masse (11) portant un moyeu (13) dit premier moyeu, tandis que l'autre desdites parties consiste en une seconde masse (12) comportant un plateau portant à sa périphérie interne un moyeu (14) dit second moyeu entourant au moins partiellement ledit premier moyeu (13), avec interposition de moyens de palier anti-friction (15) disposés radialement entre le premier moyeu (13) et le second moyeu (14), ledit dispositif de frottement (30) entourant ledit premier moyeu (13), le dispositif de frottement (30) formant un ensemble unitaire de frottement comportant au moins un élément (31) en matière de frottement en forme d'anneau de frottement pour contact de frottement avec une portée de frottement (16), globalement d'orientation axiale, solidaire de l'une desdites première (11) et seconde (12) masses, **caractérisé par le fait que** ledit ensemble unitaire (30) comprend en outre une rondelle (32) dite de serrage munie de moyens (33-37) de serrage, de maintien et de solidarisation en rotation de l'anneau de frottement (31) à l'autre desdites seconde (12) et première (11) masses.

2. Dispositif selon la revendication 1, **caractérisé par le fait que** la rondelle de serrage (32) comporte des moyens d'assemblage (34) pour rendre solidaires l'ensemble unitaire de frottement (30) et l'autre desdites seconde (12) et première (11) masses.

3. Dispositif selon la revendication 2, **caractérisé par le fait que** les moyens d'assemblage (34) consistent en des griffes globalement radiales réparties à la périphérie externe de la rondelle de serrage (32), lesdites griffes (34) étant adaptées à coopérer avec la paroi cylindrique axiale interne (18) d'un lamage (17) ménagé en bout du moyeu (14,13) de l'autre desdites seconde (12) et première (11) masses.

4. Dispositif selon l'une des revendications 1 à 3, **caractérisé par le fait que** les moyens de solidarisation en rotation de l'anneau de frottement (31) comprennent au moins une patte (37) dite de calage en rotation s'étendant radialement à la périphérie interne de la rondelle de serrage (32) et adaptée à coopérer avec une encoche radiale (38) ménagée dans l'anneau de frottement (31).

5. Dispositif selon la revendication 4 rattachée à la revendication 3, **caractérisé par le fait que** la patte de calage (37) en rotation est placée au droit d'une griffe d'assemblage (34).

6. Dispositif selon l'une des revendications 4 ou 5, **caractérisé par le fait que** l'encoche radiale (38) débouche dans une face transversale d'extrémité de l'anneau de frottement (31).

7. Dispositif selon l'une des revendications 1 à 6, **caractérisé par le fait que** les moyens de serrage sont constitués par des pattes (33) élastiques dites de serrage radial portées par la rondelle de serrage (32), s'étendant axialement et appliquant l'anneau de frottement (31) contre la portée de frottement (16), ledit anneau de frottement (31) étant déformable radialement.

8. Dispositif selon la revendication 7, **caractérisé par le fait que** les pattes de serrage radial (33) s'étendent axialement depuis la périphérie interne de la rondelle de serrage (32).

9. Dispositif selon l'une des revendications 7 ou 8, **caractérisé par le fait que** l'anneau de frottement (31) est un anneau fendu (41), le diamètre de sa face cylindrique de frottement (42) étant au repos supérieur au diamètre de la portée de frottement (16).

10. Dispositif selon l'une des revendications 1 à 9, **caractérisé par le fait que** les moyens de maintien de l'anneau de frottement (31) comprennent deux séries de pattes (35,36) dites de calage axial, s'étendant transversalement, chacune des séries étant axialement à une distance de l'autre correspondant globalement à la longueur axiale de l'anneau de frottement (31).

11. Dispositif selon la revendication 10 rattachée à l'une des revendications 3 à 9, **caractérisé par le fait que** l'une (35) des séries de pattes de calage axial est ménagée à la périphérie interne de la rondelle de serrage (32) dans le plan transversal où s'étendent les griffes d'assemblage (34).

12. Dispositif selon la revendication 10 rattachée à l'une des revendications 7 à 9, **caractérisé par le fait que** l'une (36) des séries de pattes de calage radial est constituée par des rebords radiaux ménagés à l'extrémité des pattes de serrage radial (33).

13. Dispositif selon l'une des revendications 10 à 12, **caractérisé par le fait que** les pattes de calage axial (35), les pattes de serrage radial (33) et les griffes (34) sont alternées circonférentiellement.

14. Dispositif selon l'une des revendications 1 à 13, **caractérisé par le fait que** l'ensemble unitaire de frottement (30) est disposé du côté intérieur du dispositif par rapport aux moyens de palier anti-friction (15).

15. Dispositif selon l'une des revendications 1 à 13, **caractérisé par le fait que** l'ensemble unitaire de frottement (30) est disposé du côté extérieur du dispositif par rapport aux moyens de palier anti-friction (15).

16. Dispositif selon l'une des revendications 1 à 15, **caractérisé par le fait que** les moyens de palier anti-friction (15) sont constitués par un roulement à billes.

17. Dispositif selon l'une des revendications 1 à 16, **caractérisé par le fait que** la portée de frottement (16) est solidaire de la première masse (11).

18. Ensemble unitaire de frottement pour dispositif amortisseur de torsion, **caractérisé par le fait qu'**il a les caractéristiques de l'ensemble unitaire de frottement (30) du dispositif amortisseur de torsion selon l'une des revendications 1 à 17.

## Claims

1. Torsion damping device, in particular for motor vehicles, of the type comprising two axial parts (11, 12) mounted so as to rotate with respect to each other counter to circumferentially acting elastic means and a friction device (30) acting between the said parts, in which one of the said parts consists of a first mass (11) carrying a hub (13) referred to as the first hub, whilst the other one of the said parts consists of a second mass (12) comprising a plate carrying at its internal periphery a hub (14) referred to as the second hub, at least partially surrounding the said first hub (13), with the interposing of antifriction bearing means (15) disposed radially between the first hub (13) and the second hub (14), the said friction device (30) surrounding the said first hub (13), the friction device (30) forming a unitary friction assembly comprising at least one element (31) made from friction material in the form of a friction ring for friction contact with a friction surface (16), roughly axially oriented, fixed to one of the said first (11) and second (12) masses, **characterised by** the fact that the said unitary assembly (30) also comprises a so-called clamping washer (32) provided with means (33-37) of clamping, holding and rotationally fixing the friction ring (31) to the other one of the said second (12) and first (11) masses.

2. Device according to Claim 1, **characterised by** the fact that the clamping washer (32) comprises assembly means (34) for connecting together the unitary friction assembly (30) and the other one of the said second (12) and first (11) masses.

3. Device according to Claim 2, **characterised by** the fact that the assembly means (34) consist of roughly radial claws distributed at the external periphery of the clamping washer (32), the said claws (34) being adapted to cooperate with the internal axial cylindrical wall (18) of a countersink (17) provided at the end of the hub (14, 13) of the other one of the said second (12) and first (11) masses.

4. Device according to one of Claims 1 to 3, **characterised by** the fact that the rotational connection means of the friction ring (31) comprise at least one so-called rotational fixing lug (37) extending radially at the internal periphery of the clamping washer (32) and adapted to cooperate with a radial notch (38) provided in the friction ring (31).

5. Device according to Claim 4 related to Claim 3, **characterised by** the fact that the rotational fixing lug (37) is placed in line with an assembly claw (34).

6. Device according to one of Claims 4 or 5, **characterised by** the fact that the radial notch (38) opens out in a transverse end face of the friction ring (31).

7. Device according to one of Claims 1 to 6, **characterised by** the fact that the clamping means consist of elastic so-called radial clamping lugs (33) carried by the clamping washer (32), extending axially and applying the friction ring (31) against the friction surface (16), the said friction ring (31) being radially deformable.

8. Device according to Claim 7, **characterised by** the fact that the radial clamping lugs (33) extend axially from the internal periphery of the clamping washer (32).

9. Device according to one of Claims 7 or 8, **characterised by** the fact that the friction ring (31) is a split ring (41), the diameter of its cylindrical friction face (42) being at rest greater than the diameter of the friction surface (16).

10. Device according to one of Claims 1 to 9, **characterised by** the fact that the means of holding the friction ring (31) comprise two series of so-called axial fixing lugs (35, 36), extending transversely, each of the series being axially at a distance from the other corresponding roughly to the axial length of the friction ring (31).

11. Device according to Claim 10 related to one of Claims 3 to 9, **characterised by** the fact that one (35) of the series of axial fixing lugs is provided at the internal periphery of the clamping washer (32) in the transverse plane where the assembly claws (34) extend.

12. Device according to Claim 10 related to one of Claims 7 to 9, **characterised by** the fact that one (36) of the series of radial fixing lugs consists of radial rims provided at the end of the radial clamping lugs (33).

13. Device according to one of Claims 10 to 12, **characterised by** the fact that the axial fixing lugs (35), the radial clamping lugs (33) and the claws (34) alternate circumferentially.

14. Device according to one of Claims 1 to 13, **characterised by** the fact that the unitary friction assembly (30) is disposed on the inside of the device with respect to the antifriction bearing means (15).

15. Device according to one of Claims 1 to 13, **characterised by** the fact that the unitary friction assembly (30) is disposed on the external side of the device with respect to the antifriction bearing means (15).

16. Device according to one of Claims 1 to 15, **characterised by** the fact that the antifriction bearing means (15) consist of a ball bearing.

17. Device according to one of Claims 1 to 16, **characterised by** the fact that the friction surface (16) is fixed to the first mass (11).

18. Unitary friction assembly for a torsion damping device, **characterised by** the fact that it has the characteristics of the unitary friction assembly (30) of the torsion damping device according to one of Claims 1 to 17.

## Patentansprüche

1. Torsionsdämpfungseinrichtung, insbesondere für Kraftfahrzeuge, umfassend zwei koaxiale Teile (11, 12), die zueinander drehbar gegen in Umfangsrichtung wirkende elastische Mittel angeordnet sind, und eine Reibungseinheit (30), die zwischen den Teilen wirkt, wobei der einer der Teile aus einer ersten Masse (11) besteht, die eine Nabe (13), erste Nabe genannt, umfasst, während der andere der Teile aus einer zweiten Masse (12) besteht, die eine Platte umfasst, die an ihrem inneren Umfang eine Nabe (14), zweite Nabe genannt, trägt, die mindestens teilweise die erste Nabe (13) umgibt, wobei Antifriktionslagermittel (15) radial zwischen der ersten Nabe (13) und der zweiten Nabe (14) angeordnet sind, wobei die Reibungseinheit (30) die erste Nabe (13) umgibt und eine Gesamtreibungskonstruktion bildet, die mindestens ein Element (31) aus Reibungsmaterial in Form eines Reibungsringes für den Reibungskontakt mit einem Reibungsfeld (16) von im Allgemeinen axialer Ausrichtung umfasst, das fest mit einer der ersten (11) oder zweiten Masse (12) verbunden ist, **dadurch gekennzeichnet, dass** die Gesamtkonstruktion (30) ferner eine sogenannte Feststellscheibe (32) umfasst, die mit Feststellmitteln (33-37) zum Halten und zur Drehfeststellung des Reibungsringes (31) auf der anderen der zweiten (12) oder ersten Masse (11) versehen ist.

2. Einrichtung nach Anspruch 1, **dadurch gekennzeichnet, dass** die Feststellscheibe (32) Befestigungsmittel (34) umfasst, um die Gesamtreibungskonstruktion (30) und die andere der zweiten (12) oder ersten Masse (11) fest miteinander zu verbinden.

3. Einrichtung nach Anspruch 2, **dadurch** gekenn - zeichnet , dass die Befestigungsmittel (34) aus im Allgemeinen radialen Klauen bestehen, die am äußeren Umfang der Feststellscheibe (32) verteilt und derart ausgeführt sind, dass sie mit der axialen zylindrischen Innenwand (18) einer Senkung (17) zusammenwirken, die am Ende der Nabe (14, 13) der anderen der zweiten (12) oder ersten Masse (11) vorgesehen ist.

4. Einrichtung nach einem der Ansprüche 1 bis 3, dadurchge- kennzeichnet, dass die Mittel zur Drehfeststellung des Reibungsringes (31) mindestens eine sogenannte Drehfeststellungslasche (37) umfassen, die sich radial am inneren Umfang der Feststellscheibe (32) erstreckt und derart ausgeführt ist, dass sie mit einer radialen Kerbe (38) zusammenwirkt, die in dem Reibungsring (31) vorgesehen ist.

5. Einrichtung nach Anspruch 4 in Verbindung mit Anspruch 3, **dadurch gekennzeichnet, dass** die Drehfeststellungslasche (37) im rechten Winkel zu einer Befestigungsklaue (34) vorgesehen ist.

6. Einrichtung nach Anspruch 4 oder 5, **dadurch gekennzeichnet, dass** die radiale Kerbe (38) in eine quer verlaufende Endfläche des Reibungsringes (31) mündet.

7. Einrichtung nach einem der Ansprüche 1 bis 6, **dadurch gekennzeichnet, dass** die Feststellmittel von sogenannten elastischen Laschen zur radialen Feststellung (33) gebildet sind, die von der Feststellscheibe (32) getragen werden und die sich axial erstrecken und den Reibungsring (31) an das Reibungsfeld (16) anlegen, wobei der Reibungsring (31) radial verformbar ist.

8. Einrichtung nach Anspruch 7, **dadurch** gekenn- zeichnet, dass sich die Laschen zur radialen Feststellung (33) axial vom inneren Umfang der Feststellscheibe (32) weg erstrecken.

9. Einrichtung nach Anspruch 7 oder 8, dadurchgekennzeichnet, dass der Reibungsring (31) ein Spaltring (41) ist, wobei der Durchmesser seiner zylindrischen Reibungsfläche (42) in Ruhestellung größer als der Durchmesser des Reibungsfeldes (16) ist.

10. Einrichtung nach einem der Ansprüche 1 bis 9, **dadurch gekennzeichnet, dass** die Haltemittel für den Reibungsring (31) zwei Reihen von sogenannten Laschen zur axialen Feststellung (35, 36) umfassen, die sich quer erstrecken, wobei jede der Reihen axial in einem Abstand zur anderen angeordnet ist, der im Wesentlichen der Axiallänge des Reibungsringes (31) entspricht.

11. Einrichtung nach Anspruch 10 in Verbindung mit einem der Ansprüche 3 bis 9, **dadurch gekennzeichnet, dass** eine (35) der Reihen von Laschen zur axialen Feststellung am inneren Umfang der Feststellscheibe (32) in der Querebene vorgesehen ist, in der sich die Befestigungsklauen (34) erstrecken.

12. Einrichtung nach Anspruch 10 in Verbindung mit einem der Ansprüche 7 bis 9, **dadurch gekennzeichnet, dass** eine (36) der Reihen von Laschen zur radialen Feststellung von radialen Leisten gebildet ist, die am Ende der Laschen zur radialen Feststellung (33) vorgesehen sind.

13. Einrichtung nach einem der Ansprüche 10 bis 12, **dadurch gekennzeichnet, dass** die Laschen zur axialen Feststellung (35), die Laschen zur radialen Feststellung (33) und die Klauen (34) am Umfang alternierend angeordnet sind.

14. Einrichtung nach einem der Ansprüche 1 bis 13, **dadurch gekennzeichnet, dass** die Gesamtreibungskonstruktion (30) auf der Innenseite der Einrichtung in bezug auf die Antifriktionslagermittel (15) angeordnet ist.

15. Einrichtung nach einem der Ansprüche 1 bis 13, **dadurch gekennzeichnet, dass** die Gesamtreibungskonstruktion (30) auf der Außenseite der Einrichtung in bezug auf die Antifriktionslagermittel (15) angeordnet ist.

16. Einrichtung nach einem der Ansprüche 1 bis 15, **dadurch gekennzeichnet, dass** die Antifriktionslagermittel (15) von einem Kugellager gebildet sind.

17. Einrichtung nach einem der Ansprüche 1 bis 16, **dadurch gekennzeichnet, dass** das Reibungsfeld (16) mit der ersten Masse (11) fest verbunden ist.

18. Gesamtreibungskonstruktion für eine Torsionsdämpfungseinrichtung, **dadurch gekennzeichnet, dass** sie die Merkmale der Gesamtreibungskonstruktion (30) der Torsionsdämpfungseinrichtung nach einem der Ansprüche 1 bis 17 aufweist.
